# EUROPEAN PATENT APPLICATION

(11) **EP 2 842 414 A1**
(43) Date of publication of application: **04.03.2015**
(21) Application number: 13781950.4
(22) Date of filing: 19.04.2013
(51) Int. Cl.: A01G 9/02, A01G 27/02

(54) **PLANTING DEVICE**

(30) Priority: 24.04.2012 JP 2012099098; 24.04.2012 JP 2012099099
(71) Applicant: Suntory Holdings Limited, Kita-ku, Osaka-shi Osaka 530-8203 (JP)
(72) Inventor: HASHIMOTO, Masaki, Tokyo 107-8631 (JP); NOMACHI, Makoto, Tokyo 107-8631 (JP)
(74) Representative: Vossius & Partner
(86) International application number: PCT/JP2013/061590
(87) International publication number: WO 2013/161691

(57) **Abstract**

Provided is a planting device with which the structural form of the planting device can be changed relatively simply. A planting device that has: one or multiple planting containers (A), which are provided with a water storage section capable of accumulating water for planting and a planting space in which a water-absorbing planting bed material (B) can be mounted and in which an opening (5B) that exposes the planting bed material (B) can be formed at least on the front surface side; and a frame member (C), which is capable of surrounding and supporting the one or multiple planting containers (A) so as to be freely detachable. Projections (14, 10) are formed on portions of the circumference of the planting container (A) and interlocking openings (24, 22) that fit together with the projections are provided on the circumference of the frame member (C).

## Description

### Technical Field

The present invention relates to a planting device which allows covering of a generally vertically extending face or surface with e.g. growing plant, typically for use in wall surface greening.

### Background Art

As prior-art document information relating to a planting device of the above-noted type, there is Patent Document 1 identified below. According to this Patent Document 1, a planting container includes a front plate having a square shape in its front view and a back plate having the same shape, the front and back plates being fixed to each other with bolts, nuts, etc., with a water-absorbent matrix being sandwiched therebetween. At multiple portions in its front plate, the planting container includes planting rack portions which are opened obliquely upwards. As the container described above is mounted to a wall surface by means of e.g. a wire, this is useable as a planting container for wall surface greening.

### Prior Art Document

### Patent Document

Patent Document 1: Japanese Unexamined Patent Application Publication No. 2010-239878 (paragraphs 0041-0043, Fig. 1, Fig. 2).

### Summary

### Problem to be Solved by Invention

However, with the planting device disclosed in Patent Document 1 has a complicated form having the front plate and the back plate fixed to each other with bolts, nuts, etc. with the water-absorbent matrix sandwiched therebetween. Hence, it was difficult for a user to e.g. change the configuration of the planting device.

### Means for Solving the Problem

Then, in view of the problem presented by the above-illustrated conventional art, the object of the present invention is to provide a planting device that allows relatively easy change of the configuration thereof.

According to a characterizing feature of a planting device proposed by the present invention, the planting device comprises:
one or multiple planting containers, each having a water storage portion capable of storing an amount of planting water therein and a planting space capable of mounting a water-absorbent planting bed material, the container being capable of forming, at least on a side of its front face, an opening portion exposing the planting bed material therethrough; and
a frame member capable of surrounding and supporting the one or multiple planting containers, with the one or multiple planting containers being detachably attachable thereto;
wherein the planting container forms a projection in a portion of an outer circumference thereof and the frame member includes, in an outer circumference thereof, an interlocking opening portion to be engaged with the projection.

With the planting device having the above-described characterizing feature, it is possible to obtain a planting device having superior aesthetic feature simply by causing the planting container(s) to be surrounded and supported by the frame member which is provided with a desired outer appearance. Moreover, as the frame member is detachably attachable to the planting container(s), various modes of use are made possible such as change to a frame member having a different color and using the planting container(s) and the planting bed member alone in combination, with detachment of the frame member from the planting container(s) when necessary. In these ways, the configuration of the planting device can be changed relatively easily.

Further, with the planting device having the above-described characterizing feature, when the frame member is to be attached to the planting container(s), the interlocking opening portion formed in the outer circumference of the frame member can be engaged with the projection formed at a portion of the outer circumference of the planting container. Hence, inadvertent detachment of the planting container(s) from the frame member is prevented.

Further, even when the frame member is formed of a material which is non-transparent and colorful, via a transparent water-level checking portion of the planting container which is viewed through the interlocking opening portion of the frame member, the level of the amount of planting water stored in the water storage portion inside the planting container can be checked.

According to a further characterizing feature of the present invention, an overflow pipe for discharging an amount of the planting water over a predetermined level is formed integral with the planting container.

With this arrangement, as there is integrally formed an overflow pipe for discharging an amount of the planting water supplied to the water storage portion in excess of the predetermined level, it is readily possible to prevent a situation of an excessive amount of planting water stored in the water storage portion.

According to a still further characterizing feature of the present invention, the projection comprises a lower end of the overflow pipe.

With this arrangement, when the planting container is used in combination with the frame member, engagement takes place between the lower end of the overflow pipe and the interlocking opening portion of the frame member, so that inadvertent detachment of the planting container from the frame member can be prevented effectively. Further, with this arrangement, when the overflow pipe is used, it is possible to cause an amount of planting water flowing down the overflow pipe to be discharged smoothly through the interlocking opening portion of the frame member.

According to a still further characterizing feature of the present invention, the overflow pipe is formed with an inclination relative to the perpendicular line as viewed in its front view.

Even in the case of an embodiment wherein two or more planting containers are vertically stacked and an excess amount of planting water supplied to the upper planting container is supplied through the overflow pipe into the lower planting container via an opening portion formed in an upper face of this lower planting container, with the above-described arrangement, since the overflow pipe is formed with an inclination relative to the perpendicular line as viewed in its front view, the opening portion disposed in the upper face of the planting container and the vicinity of the upper end of the overflow pipe will necessarily be disposed with an offset relative to each other in the left/right direction. Thus, there will hardly occur a situation of the planting water supplied via the opening portion disposed in the upper face of the planting container bypassing the water storage portion to be discharged via the overflow pipe to the outside.

According to a still further characterizing feature of the present invention, a transparent water-level checking portion is formed in at least one lateral face of the planting container to project therefrom, and the water-level checking portion constitutes the projection.

With this arrangement, even when the frame member is formed of a material which is non-transparent and colorful, via a transparent water-level checking portion of the planting container which is visible through the interlocking opening portion of the frame member, the level of the amount of planting water stored in the water storage portion inside the planting container can be checked.

Further, with the above-described arrangement, when the frame member is to be attached to the planting container(s), the interlocking opening portion formed in the outer circumference of the frame member can be engaged with the water-level checking portion formed in the lateral face of the planting container as a projection therefrom. Hence, inadvertent detachment of the planting container(s) from the frame member is further prevented.

According to a still further characterizing feature of the present invention, the planting container is formed integral by blow-molding of resin.

With this arrangement, molding can be effected with using a split mold having a simple construction, in comparison with a case of molding through injection molding technique for instance and also the amount of resin used can be small, so that reduction of manufacture cost is made possible also. Further, with this arrangement, in comparison with the arrangement molded through injection molding technique, it is possible to reduce sufficiently the thickness of the wall face portion constituting the planting container. Hence, a sales person or a user can easily form the opening portion with using a simple tool such as a cutter knife.

Moreover, with the above-described arrangement, since it is possible to reduce sufficiently the thickness of the wall face portion constituting the planting container, it becomes possible to render the water-level checking portion to be elastically deformable relative to the entire lateral face, so that the attachment and detachment of the planting container to/from the frame member can be further facilitated.

According to a still further characterizing feature of the present invention, the opening portion is disposed with an upward offset from the vertical center; and downwardly of the opening, there are formed a pair of supporting portions for supporting the planting bed material along a front/rear direction, with the supporting portions projecting inwards.

With this arrangement, the planting bed material can be supported along the front/rear direction by means of the pair of supporting portions formed downwardly of the opening to project inwards therefrom. Therefore, such inconveniences as wobbling displacement of the planting bed material within the planting container, falling thereof to the front or rear side within the planting space, thus causing a portion of this planting bed material to be discharged through the opening portion to the outside to be detrimental to the appearance of a plant planted in the planting bed material, can be effectively restricted.

According to a still further characterizing feature of the present invention, in opposed lateral faces of the planting container, there are integrally formed gripping portions projecting toward the planting space, the gripping portions acting also as restricting means for restricting lateral displacement of the planting bed material.

With the above-described arrangement, with the integral formation of the portions in the opposed lateral faces of the planting container which portions project toward the planting space, it is possible to provide these portions with two functions at a time, i.e. the function of gripping portion usable as handling means of the planting container and the further function of restricting means for restricting lateral displacement of the planting bed material.

According to a still further characterizing feature of the present invention, the planting container has a rear face side opposed to the front face side, and on the rear face side, an auxiliary opening portion can be formed in opposition to the opening portion.

This arrangement provides possibility of selection of the location where the opening portion (auxiliary opening portion) is to be provided, between the front face side and the rear face side. Hence, if the overflow pipe is provided at either one of the left and right ends of the planting container, by appropriately selecting which of the front face side and the rear face side the opening portion (auxiliary opening portion) is to be provided, the location of the overflow pipe can be set on either appropriate one of the left and right sides. Moreover, with this arrangement, by providing the opening portions (auxiliary opening portions) on both the front face side and the rear face side, it becomes possible to realize a mode of use wherein the planting bed material and a plant planted in this planting bed material are caused to be exposed from both the front and rear sides of the planting container.

### Brief Description of the Drawings

[Fig. 1] is a perspective view showing a planting device relating to the present invention,
[Fig. 2] is a perspective view showing a planting container relating to the present invention,
[Fig. 3] is a perspective view illustrating a process of providing an opening portion in the planting container,
[Fig. 4] is a perspective view illustrating a process of accommodating a planting bed material in the planting container,
[Fig. 5] is a perspective view illustrating a process of planting a plant in the planting bed material inside the planting container,
[Fig. 6] is a partially broken front view showing the planting container,
[Fig. 7] is a perspective view illustrating a process prior to fitting of a frame onto the planting container,
[Fig. 8] is a perspective view illustrating a process during the fitting of the frame onto the planting container,
[Fig. 9] is a perspective view showing a state where a large-sized frame is fitted on a plurality of planting containers, and
[Fig. 10] is a perspective view showing an example wherein a plurality of planting containers are assembled together and mounted on a wall surface.

### Modes of Embodying the Invention

Next, modes of embodying the present invention will be explained with reference to the accompanying drawings.

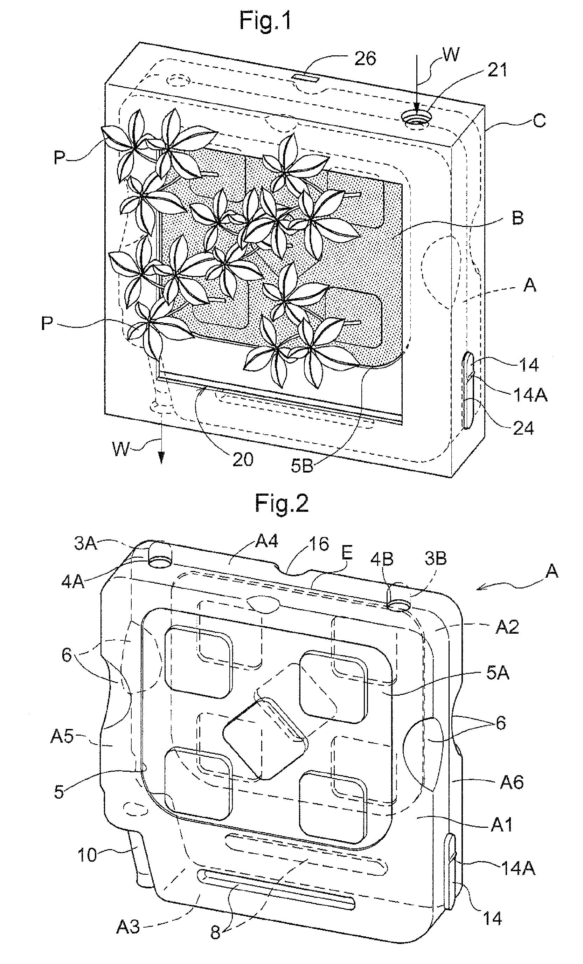

Fig. 1 shows one example of the planting device relating to the present invention, showing in particular a configuration wherein only one rectangular-shaped planting container made of transparent resin is used and a water-absorbent planting bed material B is accommodated inside this planting container A, and a detachably attachable frame C having a relatively high rigidness is fixed and fitted on the outer circumference of the planting container A, and plants P are planted in planting through holes H of the planting bed material B.

The planting container A is integrally formed by blow molding of a resin such as polystyrene. And, as illustrated in Fig. 2, the planting container A immediately after its blow molding includes a front face wall portion A1 and a rear face wall portion A2 which extend parallel with and apart from each other in the front/rear direction, a bottom wall portion A3 closing, from under, a space formed by the front face wall portion A1 and the rear face wall portion A2, a top wall portion A4 closing this space from the above, a first lateral wall portion A5 closing the space from the left side and a second lateral wall portion A6 closing the space from the right side.

The front face wall portion A1 and the rear face wall portion A2 respectively exhibit a squire shape. And, the bottom wall portion 3A, the top wall portion A4, the first lateral wall portion A5 and the second lateral wall portion A6 are formed to extend along the four sides of these squires.

The planting container A as a whole exhibits a generally rectangular plate-like shape; and as illustrated in Fig. 2, when the planting container A is caused to stand upright so that the front face wall portion A1 and the rear face wall portion A2 extend generally perpendicularly, the respective widths of the bottom wall portion A3, the top wall portion A4, and the first lateral wall portion A5 and the second lateral wall portion A6 become a fraction (e.g. from 1/5 to 1/3) of one side of the front face wall portion A1 and the rear face wall portion A2.

In the blow molding process, a resin parison is inserted between two half split molds (not shown) having mating faces which extend along the bottom wall portion A3, the top wall portion A4, the first lateral wall portion A5 and the second lateral wall portion A6. Then, compressed air is blown into the parison through inlets formed at two locations corresponding to the left and right end portions of the top wall portion A4, whereby the parison can be pressed against the inner surface of the cavity inside the half split molds.

Therefore, adjacent the left and right end portions of the top wall portion A4 immediately after the blow molding, as shown by chain lines, portions of the parison will remain as two small dome-shaped excess end portions 3A, 3B. But, when these excess end portions 3A, 3B are cut off at the base ends thereof at a desired timing after demolding from the half split molds, two upper face opening portions A4, 4B will be formed adjacent the left and right end portions of the top wall portion A4.

At least one of these upper face opening portions 4A, 4B will be used as a water supplying inlet for supplying an amount of planting water W to the plants P via the planting bed material B accommodated in the planting container A.

Along the bottom wall portion A3, the top wall portion A4, the first lateral wall portion A5 and the second lateral wall portion A6, there can be seen a burr striation E generated due to the boundary faces of the two half split molds; and the planting container A as a whole has a plane-symmetrical shape with respect to a plane extending along this burr striation E.

At a portion of the front face wall portion A1 (an example of a "front/rear face"), there is provided a rectangular window-forming line 5 having a laterally elongated rectangular shape. In this window-forming line 5, along its rectangular entire circumference, a radially inward portion thereof is provided in the form of a stepped portion receded by a depth of approximately 1 to 2 mm toward the interior of the blow mold.

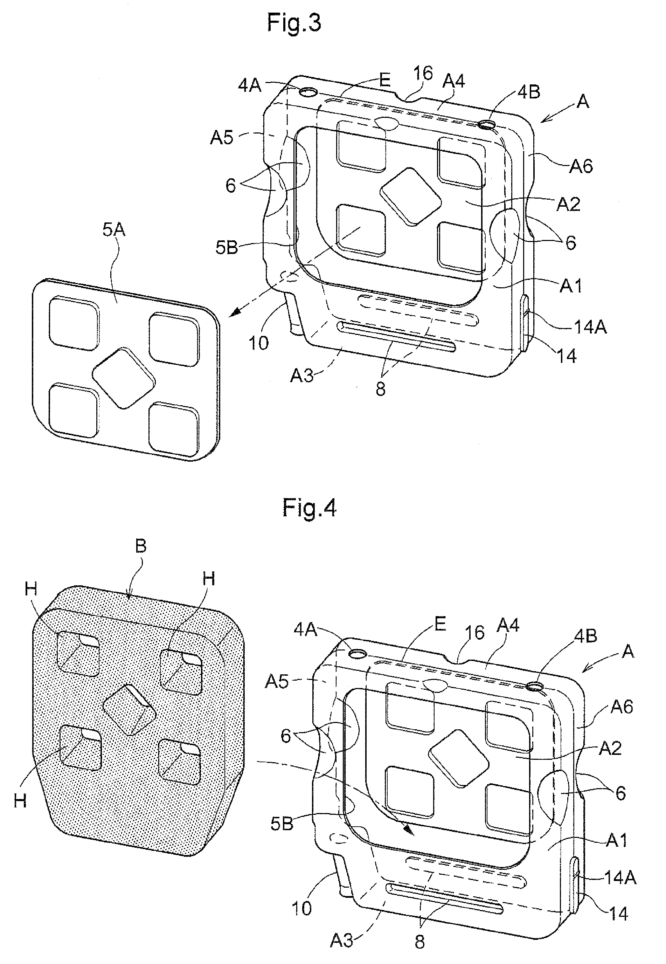

As the blow mold is formed with an appropriate thinness, when e.g. a seller, a user, etc. of the planting container A cuts in along the entire circumference of the window-forming line 5 by a cutter knife or the like with the aid of the above-described stepped portion to remove a removing portion 5A radially inwardly of the window-forming line 5 as illustrated in Fig. 3, there is formed a planting window portion 5B (an example of an "opening portion") in the front face wall portion A1.

Incidentally, in the rear face wall portion A2 (another example of the "front/rear face") too, there is provided a completely identical window-forming line 5. Thus, if desired by the seller or the user, the planting window portion 5B (an example of an "auxiliary opening portion" relative to the opening portion described above) can be formed not in the front face wall portion A1, but in the rear face wall portion A2. Alternatively, the planting window portion 5B can be formed in both the front face wall portion A1 and the rear face wall portion A2.

The inside space of the planting container A disposed below the lower edge of the planting window portion 5B formed in the manner described above serves as a water storage portion capable of storing an amount of planting water W supplied through e.g. the upper face opening portions A4, 4B and a planting space capable of mounting a water-absorbent planting bed material B.

As illustrated in Fig. 4, the planting bed material B will be mounted via the planting window portion 5B. In this regard, the planting bed material B in Fig. 4 is shown in its size after being swollen to about 1.3 times of its original size with the planting water. Therefore, the planting bed material B before its swelling can be easily mounted via the planting window portion 5B.

The planting bed material B comprises a mixture of e.g. urethane and pulverized wood dust, etc. and is capable of retaining water and air substantially uniformly and in appropriate proportions from its upper portion throughout to its lower portion and is capable also of retaining readily an amount of air needed for growth of a plant root.

The planting bed material B exhibits a somewhat vertically elongate rectangular shape and is configured such that the height of the planting bed material B after being swollen is approximately equal to or slightly smaller than a distance from an upper face of the bottom wall portion A3 to a lower face of the top wall portion 4A of the planting container A and also that the thickness of the planting bed material B after being swollen is somewhat smaller than a distance from the inner face of the front face wall portion A1 to an inner face of the rear face wall portion A2 of the planting container A.

Slightly upwardly of the vertical center of each one of the first lateral wall portion A5 and the second lateral wall portion A6 of the planting container A, there are formed handling recess portions 6 (an example of "gripping portions" and "restricting means") in the form of depressions for facilitating handling of the planting container A. Referring to each one of the first lateral wall portion A5 and the second lateral wall portion A6, two such handling recess portions 6 are provided in the left/right symmetry across the vertically extending burr striation E. And, the width of the planting bed material B after being swollen is set to be approximately same as or slightly smaller than the distance from the inner face of the handling recess portion 6 disposed on the side of the first lateral wall portion A5 to the inner face of the handling recess portion 6 disposed on the side of the second lateral wall portion A6. The handling recess portions 6 serve also as restricting means for restricting lateral displacement of the planting bed material B accommodated in the planting container A.

The planting window portion 5B formed along the window-forming line 5 is formed at a position with an upward offset from the vertical center of the front face wall portion A1.

Also, five planting through holes H formed through the generally plate-like planting bed material B along the front/rear direction as a whole are formed at positions with an upward offset from the vertical center of the front face wall portion A1.

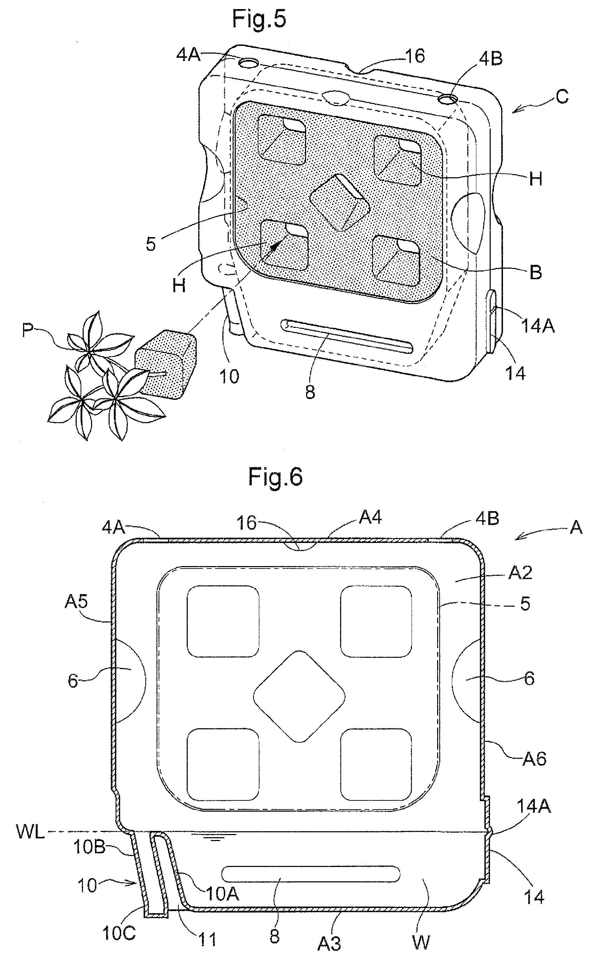

Consequently, as shown in Fig. 5, under the swollen condition of the planting bed material B accommodated in the planting container A being swollen with the planting water W, the five planting through holes H disposed in the planting bed material B are distributed substantially equidistantly on the inner side of the planting window portion 5B upwardly offset as described above.

Incidentally, as may be understood from Fig. 4 and Fig. 5, no planting through hole H is provided at the lower portion of the planting bed material B disposed more downwardly than the lower edge of the planting window portion 5B, and as left and right lateral portions of this portion are tapered downwards with progressively decreasing width as seen in the front view, thus serving to secure a larger volume available for the water storage portion to be formed downwardly of the lower edge of the planting window portion 5B.

From positions of the front face wall portion A1 and the rear face wall portion A2 downwardly of the lower edge of the planting window portion 5B, there are formed supporting projections 8 (an example of "supporting portions") in the form of ribs which are horizontally narrow and elongate in the left/right direction to project toward the inside of the blow mold. These supporting projections 8 as being spaced apart from each other in the front/rear direction come into contact with the swollen planting bed material B, thus stabilizing the posture of this planting bed material B approximately perpendicularly.

As shown in Fig. 6, at a position corresponding to midway between the left side, first lateral wall portion A5 and the bottom wall portion A3, there is integrally formed an overflow portion 10 for allowing automatic overflowing of an amount of the planting water exceeding a proper reference wall level WL.

The overflow portion 10 includes a weir portion 10A formed to project upwardly from the vicinity of the right end of the bottom wall portion A3 and an overflow pipe 10B projecting smoothly downwards from the upper end of the weir portion 10A and the lower end of the first lateral wall portion A5 so as not to project laterally. The weir portion 10A and the overflow pipe 10B are interconnected via a reinforcing portion 11 in the form of a thin plate-like rib.

The upper end of the weir portion 10A is disposed at the proper reference water level WL which is set slightly lower than the lower edge of the planting window portion 5B.

As shown in Fig. 6, under the condition immediately after blow molding, the lower end of the overflow pipe 10B is closed like a blind pipe. Hence, the above arrangement as it is does not serve as the overflow portion 10. Only after the lower end of the overflow pipe 10 is cut away substantially horizontally at a position 10C, the arrangement becomes capable of causing an excess amount of planting water over the weir portion 10A to be overflown downwards via the overflow pipe 10B.

For instance, in case two planting containers A are stacked one on top of the other directly, without using the frame C, if these planting containers A are of the same shape with the planting window portion 5B being formed in the front face wall portion A1, upon alignment of the left/right centers of the planting containers A, the lower end of the overflow pipe 10B of the upper disposed planting container A can be inserted smoothly into the upper face opening portion 4A on the left side of the downwardly disposed planting container A.

Incidentally, since selection is made possible regarding the location to provide the planting window portion 5B (opening portion, auxiliary opening portion) between the front face wall portion A1 and the rear face wall portion A2 as described above, it is possible to set the position of the overflow pipe at any right or left convenient position desired by the user, through selecting in which one of the front face wall portion A1 and the rear face wall portion A2 the planting window portion 5B is to be provided.

Further, there will hardly occur a situation of the planting water supplied directly downwards through the upper face opening portion 4A to the inside of the planting container A being inadvertently discharged to the outside of the planting container A via the overflow pipe 10B. This is because the overflow pipe 10B is slanted from the upper end which is in agreement with the height of the weir portion 10A, progressively inwards in its front view towards the lower end, so that the upper end of the overflow pipe 10B and the upper face opening portion 4A are offset relative to the left/right direction of the planting container A and also because an amount of planting water supplied through the upper face opening portion 4A to the inside of the planting container A will generally be either absorbed in the planting bed material B or flow along the vicinity of the surface of the planting bed material B toward the bottom inside the planting container A.

As shown in Fig. 6, in the second lateral wall portion A6 (an example of an "outer circumference") disposed on the right side of the planting container A, there is formed a vertically elongate water-level checking portion 14 as a projection therefrom. As the planting container A as a whole is formed transparent, in case the planting container A and the planting bed material B alone are used in combination as will be described later, it is possible to check the actual level of planting water W from any desired direction of the planting container A. However, in the case of using the planting container A with the frame C generally formed of a non-transparent material being fitted thereon as illustrated in Fig. 1, the water level cannot be checked from the front face of the frame C. For this reason, an arrangement is made such that the level of the planting water W is checked through the water-level checking window 24 (an example of an "interlocking opening portion") formed through a right side lateral wall portion C4 of the frame C and the above-described water-level checking window 14 in alignment with this water-level checking window 24.

The frame C includes one generally square-shaped front plate portion C1 having a rectangular window portion 20 and four side plate portions C2, C3, C4, C5 extending perpendicularly from the fours sides of the front face portion C1.

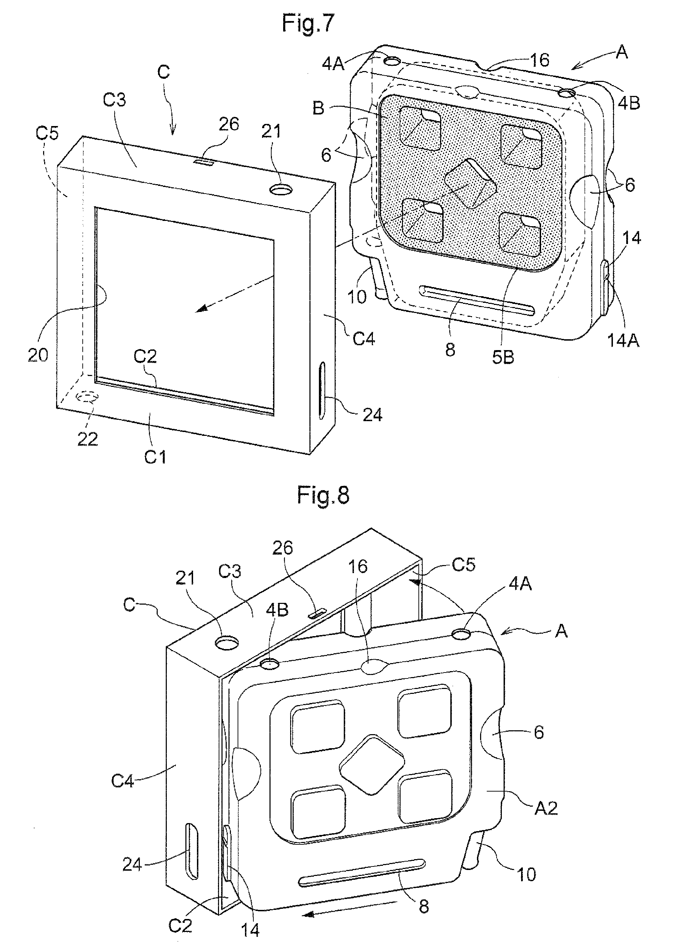

When the frame C is to be fitted over or engaged outwardly with the planting container A, as illustrated in Fig. 7, the front plate portion C1 will be laid over or overlapped with the front face wall portion A1 forming the planting window portion 5.

In the side plate portion C3 on the top side of the frame C, there is formed an upper through hole 21 for supplying planting water therethrough. In the side plate portion C2 on the bottom side of the frame C, there is formed one lower through hole 22 for discharging an excess amount of planting water flown down the overflow pipe 10B to the outside of the planting device.

The lateral width and the height of the outer dimensions of the planting container A are set substantially same as the lateral width and the height of the inner dimensions of the frame C. Also, the water-level checking portion 14 (an example of a "projection") of the planting container A is configured to be engageable with the water-level checking window 24 of the frame C; and the lower through hole 22 (an example of the "auxiliary interlocking opening portion") on the bottom side of the frame C is configured to be engageable with the lower end (an example of the "projection") of the overflow pipe 10B.

When the frame C is to be fitted over the planting container A, as illustrated in Fig. 8, first, the planting container A will be introduced under a slanted posture in its plane view relative to the frame C such that the water-level checking portion 14 of the planting container A may be brought into the vicinity of the water-level checking window 24 of the frame C. Next, while the planting container A is being rotated to bring the water-level checking portion 14 into engagement with the water-level checking window 24, the first lateral wall portion A5 of the planting container A will be pushed in to the inner side of a right lateral plate portion C5, whereby engagement will eventually be established between the lower end of the overflow pipe 10B and the lower through hole 22 of the frame C, thus completing the mounting.

Incidentally, the lower end of the overflow pipe 10B is engageable with the lower through hole 22 of the frame C, regardless of whether this lower end of the overflow pipe 10B is opened with cutting or remains closed as being not yet cut. And, when the lower end of the overflow pipe 10B is opened, the through hole 22 functions as a water discharge opening for discharging an excess amount of planting water W flowing out of the overflow pipe 10B.

At the left/right center on the rear side of a top face side plate portion C3 of the frame C, there is formed therethrough a retaining hole 26 for hooking. Hence, as a length of string or a hook member suited for this retaining hole 26 or a needle-like attaching means mounted erect from the wall surface is retained in this retaining hole 26, the planting device under the condition shown in Fig. 1 can be suspended from the wall surface.

At the left/right center of the top wall portion A4 of the planting container A, there are formed a pair of front and rear circumventing concave portions 16 for allowing passage therethrough of the string or the hook member described above. These front and rear pair of circumventing concave portions 16 serve also for supporting an upper end vicinity of the planting bed material B from the front and rear directions.

Further, in the water-level checking portion 14 of the planting container A, there is formed, as a projection therefrom, a horizontal linear pointer 14A indicating the reference water level corresponding to the height of the weir portion 10A of the overflow portion 10.

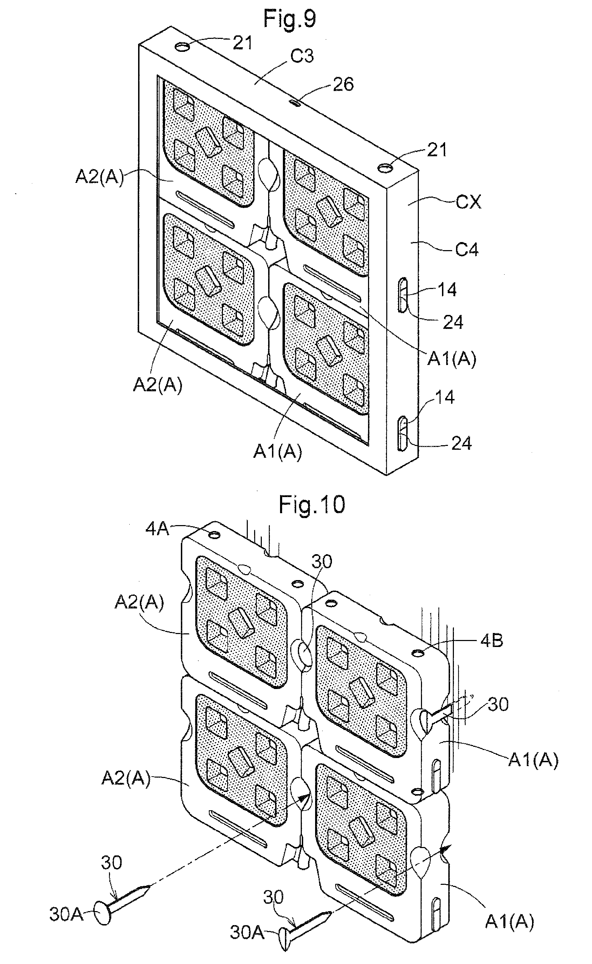

Fig. 9 shows an exemplary mode of use wherein four planting containers A are mounted and retained on the upper, lower, right and left sides in a tile-like layout, on the inner side of an oversized frame CX.

In this particular case, the two planting containers A stacked vertically on the right side form the planting window portions 5B in the front face wall portion A1, whereas the two planting containers A stacked vertically on the left side form the planting window portions 5B in the rear face wall portion A2. Therefore, all of the four planting containers A have their overflow pipes 10B disposed toward the left/right center, thus presenting a symmetric layout (left/right symmetry) as a whole.

In the side plate portion C3 on the top face side of the frame CX, there are formed two upper through holes 21 for supplying the planting water. In the side plate portion C4 on the right side of the frame CX, there is formed the lower through hole 22 (not shown) to come into engagement with the lower end of the overflow pipe 10B.

Further, in the left and right side plate portions of the frame CX, there are formed four water-level checking windows 24 in total for engagement with the respective water-level checking portions 14 of the four planting containers A.

If the lower ends of the overflow pipes 10B of at least two planting containers A disposed on the upper side are kept opened and planting water W is supplied to these upper side planting containers A through the upper face opening portions 4A, an excess amount of planting water W for these upper planting containers A will be supplied via the overflow pipes 10B to the planting containers A disposed downwards, so that all of the planting bed materials B accommodated in the four planting containers A can be rendered into water-retained conditions, respectively.

Incidentally, as may be understood from the illustration in Fig. 5 for instance, the inventive device is usable also as a planting device comprised of combination of the planting container A and the planting bed material B only, without using the frame C.

Fig. 10 shows a state wherein four planting containers A are disposed in upper, lower and left and right juxtaposition, without using the frame C. In this case too, the two planting containers A stacked vertically on the right side form the planting window portions 5B in the front face wall portion A1, whereas the two planting containers A stacked vertically on the left side form the planting window portions 5B in the rear face wall portion A2. Therefore, all of the four planting containers A have their overflow pipes 10B disposed toward the left/right center, thus presenting a symmetric layout (left/right symmetry) as a whole.

The planting containers A can be fixed to a wall surface by means of special attaching means 30 as shown in Fig. 10 for instance. This attaching means 30 includes a leg portion to be struck into the wall surface like an anchor and a head portion 30A to be engaged into the left/right handling recess portion 6 from the lateral side. Hence, by this method, a desired number planting containers A can be fixed to a wall surface.

Aside from the frame C shown in Fig. 7, there may be provided a left/right inversed frame member having the water supplying through hole 21 and the water discharging through hole 22 formed in left/right inverse arrangement relative to the window portion 20 from the frame C. In this case, a mode of use will become possible wherein the frame C having the planting container A forming the planting window portion 5B in the front face wall portion A1 engaged therein as shown in Fig.7 and the left/right inversed frame having the planting container A forming the planting window portion 5B in the rear face wall portion A2 unlike Fig. 7 illustration, stacked one on top of the other.

### Industrial Applicability

The invention is applicable as a technique for solving the problem conventionally suffered by a planting device including a planting container having a water storage portion capable of storing an amount of planting water therein, a planting space capable of mounting a water-absorbent planting bed material and an opening portion exposing the planting bed material therethrough and a frame member capable of surrounding and supporting the planting container.

### Description of Reference Marks

- A: planting container
- A1: front face wall portion (front/rear face)
- A2: rear face wall portion (front/rear face)
- B: planting bed material
- C: frame
- H: planting through hole
- P: plant
- W: planting water
- 5: window-forming line
- 5A: removing portion
- 5B: planting window portion (opening portion, auxiliary opening portion)
- 6: handling recess portion (gripping portion, restricting means)
- 8: supporting projection (supporting portion)
- 10: overflow portion
- 10B: overflow pipe (projection)
- 14: water-level checking portion (projection)
- 22: lower through hole (auxiliary interlocking opening portion)
- 24: water-level checking window (interlocking opening portion)

## Claims

1. A planting device comprising:
one or multiple planting containers, each having a water storage portion capable of storing an amount of planting water therein and a planting space capable of mounting a water-absorbent planting bed material, the container being capable of forming, at least on a side of its front face, an opening portion exposing the planting bed material therethrough; and
a frame member capable of surrounding and supporting the one or multiple planting containers, with the one or multiple planting containers being detachably attachable thereto;
wherein the planting container forms a projection in a portion of an outer circumference thereof and the frame member includes, in an outer circumference thereof, an interlocking opening portion to be engaged with the projection.

2. The planting device according to claim 1, wherein an overflow pipe for discharging an amount of the planting water over a predetermined level is formed integral with the planting container.

3. The planting device according to claim 2, wherein the projection comprises a lower end of the overflow pipe.

4. The planting device according to claim 2 or 3, wherein the overflow pipe is formed with an inclination relative to the perpendicular line as viewed in its front view.

5. The planting device according to any one of claims 1-4, wherein a transparent water-level checking portion is formed in at least one lateral face of the planting container to project therefrom, and the water-level checking portion constitutes the projection.

6. The planting device according to any one of claims 1-5, wherein the planting container is formed integral by blow-molding of resin.

7. The planting device according to any one of claims 1-6, wherein the opening portion is disposed with an upward offset from the vertical center; and downwardly of the opening, there are formed a pair of supporting portions for supporting the planting bed material along a front/rear direction, with the supporting portions projecting inwards.

8. The planting device according to any one of claims 1-7, wherein in opposed lateral faces of the planting container, there are integrally formed gripping portions projecting toward the planting space, the gripping portions acting also as restricting means for restricting lateral displacement of the planting bed material.

9. The planting device according to any one of claims 1-8, wherein the planting container has a rear face side opposed to the front face side, and on the rear face side, an auxiliary opening portion can be formed in opposition to the opening portion.
